# EUROPEAN PATENT APPLICATION

(11) **EP 3 839 378 A1**
(43) Date of publication of application: **23.06.2021**
(21) Application number: 19218941.3
(22) Date of filing: 20.12.2019
(51) Int. Cl.: F25B 5/02, F25B 1/10

(54) **A METHOD FOR CONTROLLING A VAPOUR COMPRESSION SYSTEM DURING LOAD SHEDDING**

(71) Applicant: Danfoss A/S, 6430 Nordborg (DK)
(72) Inventor: LARSEN, Lars Finn Sloth, 6430 Nordborg (DK); FUNDER-KRISTENSEN, Torben, 6430 Nordborg (DK)
(74) Representative: Stevens, Brian

(57) **Abstract**

A method for controlling a vapour compression system (1) comprising two or more evaporators (5, 12), each evaporator (5, 12) being arranged in thermal contact with a refrigerated volume, and each evaporator (5, 12) receiving refrigerant via an expansion device (6, 13) is disclosed. In response to receipt of a load shedding command originating from a power grid (17), the vapour compression system (1) reduces a compressor capacity of the compressor unit. The refrigerated volumes are divided into at least two prioritized categories of refrigerated volumes, where a first category (18) includes refrigerated volumes with temperature critical storage, and a second category (19) includes refrigerated volumes with temperature non-critical storage. Refrigerant supply to the evaporator(s) (5, 12) being in thermal contact with the refrigerated volume(s) of the second category (19) is discontinued, and refrigerant supply to the evaporator(s) (5, 12) being in thermal contact with the refrigerated volume(s) of the first category (18) is continued. Thereby the vapour compression system (1) is capable of providing load shedding services for an extended period of time without compromising temperature critical storage.

## Description

### FIELD OF THE INVENTION

The present invention relates to a method for controlling a vapour compression system with two or more refrigerated volumes following a load shedding command originating from a power grid. The method according to the invention allows the vapour compression system to provide load shedding services to the power grid for an extended period of time without compromising quality requirements of the refrigerated volumes.

### BACKGROUND OF THE INVENTION

Power grids interconnect power suppliers, such as power plants or renewable power producers, with power consumers. To this end, the available power provided by the power suppliers and the power needs of the power consumers need to be balanced. When the total power production of the power suppliers does not match the total power need of the power consumers, then either the power production or the power consumption needs to be adjusted. Furthermore, an adjustment of the power production or power consumption may be required in order to stabilize the power grid, in terms of maintaining a stable voltage and a stable frequency of the power grid.

Thus, in the case that a reduction in the power consumption is required, the power grid may request some of the power consumers to reduce their power consumption to a certain level, possibly to zero power consumption. This is sometimes referred to as 'load shedding'. The power grid operator may reward power consumers which make themselves available for providing load shedding capability, and it is therefore desirable, in particular for large power consumers, to be able to provide this service. However, providing load shedding should never be allowed to affect the primary operation of the power consumer.

In vapour compression systems, such as refrigeration systems, air condition systems or heat pumps, the primary operation is to ensure that a certain temperature level is maintained within specific refrigerated or heated volumes. For instance, in refrigeration systems, such as refrigeration systems installed in supermarkets, the purpose is to maintain a temperature inside each of a number refrigerated volumes, e.g. in the form of display cases, which ensures that the quality of the goods stored in each refrigerated volume is not compromised. The stored goods could, e.g., be in the form of food items. Such food items may be destroyed or become unsafe to consume if they are stored at temperatures outside a specified temperature range. Therefore, vapour compression systems which have previously offered load shedding capability to power grids have done so in a cautious manner, where it is always possible for the vapour compression system to draw sufficient power from the power grid to ensure an appropriate temperature level in all refrigerated or heated volumes. Thereby the actual full load shedding capability of the vapour compression system may not be made available to the power grid.

### DESCRIPTION OF THE INVENTION

It is an object of embodiments of the invention to provide a method for controlling a vapour compression system during load shedding, in which extended load shedding capability can be provided to a power grid, as compared to prior art methods.

It is a further object of embodiments of the invention to provide a method for controlling a vapour compression system during load shedding, which allows load shedding services to be provided to a power grid for an extended period of time, as compared to prior art methods.

The invention provides a method for controlling a vapour compression system, the vapour compression system comprising a compressor unit comprising at least one compressor, a heat rejecting heat exchanger, and two or more evaporators, each evaporator being arranged in thermal contact with a refrigerated volume, and each evaporator receiving refrigerant via an expansion device, the method comprising the steps of:
- the vapour compression system receiving a load shedding command originating from a power grid,
- in response to receipt of the load shedding command, the vapour compression system reducing a compressor capacity of the compressor unit,
- dividing the refrigerated volumes into at least two prioritized categories of refrigerated volumes, where a first category includes refrigerated volumes with temperature critical storage, and a second category includes refrigerated volumes with temperature non-critical storage,
- discontinuing refrigerant supply to the evaporator(s) being in thermal contact with the refrigerated volume(s) of the second category, and
- continuing refrigerant supply to the evaporator(s) being in thermal contact with the refrigerated volume(s) of the first category.

Thus, the invention provides a method for controlling a vapour compression system. In the present context, the term 'vapour compression system' should be interpreted to mean any system in which a flow of fluid medium, such as refrigerant, circulates and is alternatingly compressed and expanded, thereby providing either refrigeration or heating of a volume. Thus, the vapour compression system may be a refrigeration system, an air condition system, a heat pump, etc.

The vapour compression system comprises a compressor unit comprising at least one compressor, a heat rejecting heat exchanger, and two or more evaporators. Each of the evaporators receives refrigerant via an expansion device, e.g. in the form of an expansion valve. Accordingly, the refrigerant supply to each evaporator can be controlled individually by appropriately controlling the respective expansion devices, e.g. controlling opening degrees of the expansion devices. The compressor unit, the heat rejecting heat exchanger, the expansion devices and the evaporators are arranged in a refrigerant path having refrigerant flowing therein, in such a manner that the evaporators, along with their respective expansion devices, are arranged fluidly in parallel.

Refrigerant flowing in the refrigerant path is, thus, compressed by the compressor(s) of the compressor unit before being supplied to the heat rejecting heat exchanger. In the heat rejecting heat exchanger, heat exchange takes place between the refrigerant and the ambient or a secondary fluid flow across the heat rejecting heat exchanger, in such a manner that heat is rejected from the refrigerant.

The refrigerant leaving the heat rejecting heat exchanger is supplied to the respective expansion devices, where it undergoes expansion before being supplied to the respective evaporators. The refrigerant being supplied to the evaporators is thereby in a mixed gaseous and liquid state. In the evaporators, the liquid part of the refrigerant is at least partly evaporated, while heat exchange takes place with a secondary fluid flow across the evaporator, in such a manner that heat is absorbed by the refrigerant flowing through the evaporators. Finally, the refrigerant is supplied to the compressor(s) of the compressor unit.

Each evaporator is arranged in thermal contact with a refrigerated volume, e.g. in the form of a display case, a room, or any other suitable kind of closed volume. Thus, the heat exchange taking place in a given evaporator provides temperature control in the form of cooling to the refrigerated volume which is in thermal contact therewith. Accordingly, the refrigerant supply to each evaporator is controlled individually to maintain a certain temperature in the respective refrigerated volumes associated therewith.

In the method according to the invention, the vapour compression system initially receives a load shedding command originating from a power grid. The load shedding command reflects a need of the power grid for a reduction in power consumption of the power consumers connected to the power grid. Thus, the load shedding command instructs the vapour compression system to reduce its power consumption, i.e. perform load shedding, in order to provide load shedding services towards the power grid.

The load shedding command may simply be an instruction to reduce power consumption. Alternatively, the load shedding command may specify the required load shedding more detailed, e.g. specifying the required reduction in power consumption in absolute power units or as a percentage of the present power consumption, specifying a duration of the reduction in power consumption, etc.

In response to receipt of the load shedding command, the vapour compression system reduces a compressor capacity of the compressor unit. A vapour compression system comprises a number of power consumers, such as fans, electrical valves, sensors, etc. However, the largest power consumer, by far, of a vapour compression system is the compressor unit. Therefore, reducing the compressor capacity of the compressor unit, and thereby the power consumption of the compressor unit, has a significant impact on the total power consumption of the vapour compression system.

Next, the refrigerated volumes are divided into at least two prioritized categories of refrigerated volumes. A first category includes refrigerated volumes with temperature critical storage, and a second category includes refrigerated volumes with temperature non-critical storage. Accordingly, the refrigerated volumes are evaluated, based on what is being stored in the refrigerated volumes, and taking the temperature sensibility of the storage into account. For instance, refrigerated volumes containing perishable goods with a low thermal capacity, e.g. sliced meat products or certain medical drugs, may be considered temperature critical, whereas refrigerated volumes containing goods with high thermal capacity, e.g. large lumps of frozen meat, and/or goods which are less sensible to an increase in temperature may be considered temperature non-critical. Furthermore, the quality of some stored goods may be more sensitive with respect to a slight increase in temperature than others. For instance, sensitivity with respect to bacterial growth, chemical changes in the products, crystallization, etc. may be taken into account when determining whether a refrigerated volume is to be categorized in the first category or the second category. Furthermore, rooms which are intended to accommodate people, in particular sick people, such as patients in hospital, may be considered temperature critical, whereas storage rooms or waiting areas may be considered temperature non-critical.

Accordingly, an overview is gained regarding which refrigerated volumes require strict temperature control within a narrow temperature range, and for which refrigerated volumes temperatures outside such a narrow temperature range can be accepted without compromising the quality of the storage of the refrigerated volumes.

Finally, the refrigerant supply to the evaporator(s) being in thermal contact with the refrigerated volume(s) of the second category is discontinued, while the refrigerant supply to the evaporator(s) being in thermal contact with the refrigerated volume(s) of the first category is continued.

Thereby, it is ensured that normal temperature control is maintained in the refrigerated volumes with temperature critical storage, and accordingly that the temperature sensitive storage is maintained within a required strict temperature range.

On the other hand, the refrigerated volumes with temperature non-critical storage will not be cooled, and the temperature in these refrigerated volumes will therefore be allowed to increase, at least to a certain limit. However, this will not affect the quality of the storage, since it is considered temperature non-critical.

When the compressor capacity is reduced, the refrigerant being available for distribution among the evaporators, i.e. refrigerant being available for expansion in the evaporators, thereby providing cooling in the associated refrigerated volumes, is also reduced. By dividing the refrigerated volumes into prioritized categories and controlling the refrigerant supply to the evaporators in the manner described above, the available refrigerant is distributed among the evaporators in such a manner that the refrigerated volumes with temperature critical storage are given priority over refrigerated volumes with temperature non-critical storage. Thereby the refrigerated volumes with temperature critical storage can maintain a normal refrigerant supply for a longer period of time, without restoring the compressor capacity, and without compromising the quality of the storage of any of the refrigerated volumes. Accordingly, the vapour compression system is capable of providing load shedding services to the power grid for an extended period of time.

The step of discontinuing refrigerant supply may comprise closing the expansion device(s) which supply refrigerant to the evaporator(s) being in thermal contact with the refrigerated volume(s) of the second category. In the case that the expansion devices are in the form of expansion valves, the relevant expansion valves may simply be moved to a fully closed position, thereby stopping the refrigerant supply to the corresponding evaporators.

The step of reducing the compressor capacity may comprise stopping all compressors of the compressor unit. According to this embodiment, the refrigerant circulation provided by the compressors is completely stopped, and thereby the available refrigerant for distribution among the evaporators is very limited. In this case it is very relevant to ensure that the refrigerated volumes with temperature critical storage are given priority when the available refrigerant is distributed among the evaporators. However, stopping all of the compressors essentially reduces the power consumption of the vapour compression system to zero, and thereby provides efficient load shedding.

As an alternative, the compressor capacity may be reduced to a non-zero level, thereby maintaining some refrigerant circulation.

The vapour compression system may be a refrigeration system and the refrigerated volumes may be display cases, and the step of dividing the refrigerated volumes into at least two prioritized categories of refrigerated volumes may be performed on the basis of types of goods stored in the display cases.

For instance, the refrigeration system may be of the kind which is used in supermarkets or the like. In this case some of the display cases may contain cooled goods, e.g. stored at a temperature of approximately 5°C, and some of the display cases may contain frozen goods, e.g. stored at a temperature of approximately -18°C. In this case the display cases containing cooled goods may be considered more temperature critical than the display cases containing frozen goods, because a temperature increase in a cooled display case from 5°C to 8°C would normally be considered more critical to the quality of the stored goods than a temperature increase in a freezer display case from -18°C to -15°C.

The step of dividing the refrigerated volumes into at least two prioritized categories of refrigerated volumes may comprise evaluating thermal capacity of the goods stored in the display cases. Goods with a high thermal capacity will normally be less sensitive to an increase in the air temperature inside the refrigerated volume than goods with a low thermal capacity. Accordingly, the display cases storing goods with a low thermal capacity, such as sliced meat, may be categorized in the first category. Similarly, display cases storing goods with high thermal capacity, such as dairy products or large lumps of frozen meat, may be categorized in the second category.

Alternatively or additionally, the step of dividing the refrigerated volumes into at least two prioritized categories of refrigerated volumes may comprise evaluating a surface area to volume ratio of the goods stored in the display cases. For instance, goods with a high surface area to volume ratio may be considered temperature sensitive, and display cases storing such goods may therefore be categorized in the first category, whereas goods with a low surface area to volume ratio may be considered less temperature sensitive, and display cases storing such goods may therefore be categorized in the second category.

Alternatively or additionally, the step of dividing the refrigerated volumes into at least two prioritized categories may be based on another sensitive thermal characteristic, e.g. thermal diffusivity.

As an alternative, the vapour compression system may be an air condition system and the refrigerated volumes may be rooms, and the step of dividing the refrigerated volumes into at least two prioritized categories of refrigerated volumes may be performed on the basis of designated use of the rooms. For instance, rooms where people are supposed to be may be categorized in the first category, thereby ensuring the comfort of the people in the room, whereas rooms which are merely used for storage of non-perishable or temperature non-critical items may be categorized in the second category.

The method may further comprise the step of, in response to receipt of the load shedding command, activating a thermal storage and supplying cooling to at least some of the refrigerated volumes from the thermal storage.

According to this embodiment, apart from the cooling provided to the refrigerated volumes by the available refrigerant, additional cooling is provided from the thermal storage. Thereby the vapour compression is capable of providing load shedding services to the power grid for an extended period of time, without compromising the quality of the stored goods or the comfort of people in the refrigerated volumes.

The thermal storage could, e.g., be in the form of a storage containing a phase changing material, e.g. an ice storage. Alternatively or additionally, the thermal storage could include a liquid refrigerant buffer being circulated, e.g. by means of a pump. Alternatively or additionally, the thermal storage could include the stored goods itself. The cooling provided by the thermal storage may, e.g., be provided by means of heat exchange between the thermal storage and one or more of the refrigerated volumes or between the thermal storage and the refrigerant flowing in the refrigerant path.

The step of dividing the refrigerated volumes into at least two prioritized categories of refrigerated volumes may be performed on the basis of operation history of the refrigerated volumes. According to this embodiment, the operation history of each of the refrigerated volumes is also taken into account when deciding which of the refrigerated volumes are to be given priority when distributing the available refrigerant among the evaporators, and which of the refrigerated volumes need not be given priority.

For instance, refrigerated volumes which have recently performed a defrost procedure may be expected to have an increased air temperature, and therefore such refrigerated volumes may be given priority, i.e. they may be categorized in the first category. Alternatively or additionally, the previous performance of the refrigerated volumes may be taken into account. For instance, refrigerated volumes which have previously had difficulties in maintaining a temperature within a desired temperature range may be categorized in the first category, and thereby be given priority when distributing the available refrigerant among the evaporators. On the other hand, refrigerated volumes which have previously exhibited good abilities to maintain the temperature within a desired temperature range may be categorized in the second category.

The vapour compression system may comprise a medium temperature (MT) part and a low temperature (LT) part, and the method may further comprise the step of supplying refrigerant from the MT part of the vapour compression system to the LT part of the vapour compression system, in response to receipt of the load shedding command.

According to this embodiment, the vapour compression system is of a kind which comprises a medium temperature (MT) part as well as a low temperature (LT) part. The MT part may comprise refrigerated volumes applied for cooling, i.e. storage at approximately 5°C, whereas the LT part may comprise refrigerated volumes applied for freezing, i.e. storage at approximately -18°C. In vapour compression systems of this kind, the pressure prevailing in the LT part is normally lower than the pressure prevailing in the MT part. The pressure difference between the LT part and the MT part may be used for driving a refrigerant flow from the MT part towards the LT part, thereby allowing the expansion devices and the evaporators of the MT part of the vapour compression system to expand refrigerant and provide cooling for an extended period of time, even if all the compressors have been stopped.

The method may further comprise the step of pumping refrigerant out of the evaporator(s) being arranged in thermal contact with the refrigerated volume(s) of the second category. According to this embodiment, the refrigerant which is present in the evaporators of the refrigerated volumes of the second category is actively pumped out and made available to the evaporators of the refrigerated volumes of the first category. This allows the vapour compression system to provide load shedding services for an extended period of time without compromising the temperature critical storage of the refrigerated volumes of the first category. For instance, the refrigerant may be condensed and pumped towards the evaporators of the refrigerated volumes of the second category in liquid form, e.g. as described above. This is particularly relevant when the vapour compression system comprises an LT part and an MT part.

The load shedding command originating from the power grid may be provided by an aggregator. In the present context the term 'aggregator' should be interpreted to mean an entity which administers a number of power consumers, for instance a number of vapour compression systems, and which ensures that each power consumer receives required power from the power grid, while ensuring that any obligations towards the power grid are fulfilled by the power consumers.

According to this embodiment, the power grid may forward a load shedding command to the aggregator, specifying a total load shedding to be provided by all of the power consumers being administered by the aggregator. Based thereon, the aggregator may generate load shedding commands to each of the power consumers, in such a manner that the total load shedding need of the power grid is met, while none of the power consumers is requested to deliver load shedding which it is not capable of delivering.

As an alternative, the load shedding command may be provided directly from the power grid to the vapour compression system.

### BRIEF DESCRIPTION OF THE DRAWINGS

The invention will now be described in further detail with reference to the accompanying drawings in which
Figs. 1-7 are diagrammatic views of vapour compression systems being controlled in accordance with methods according to seven different embodiments of the invention, and
Fig. 8 is a block diagram illustrating a number of vapour compressions system being administered by an aggregator in accordance with a method according to an embodiment of the invention.

### DETAILED DESCRIPTION OF THE DRAWINGS

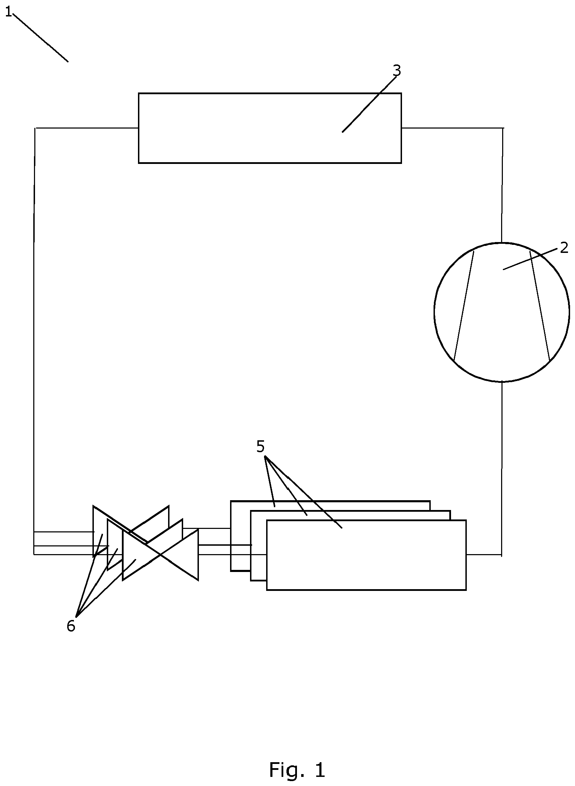

Fig. 1 is a diagrammatic view of a vapour compression system 1 being controlled in accordance with a method according to a first embodiment of the invention. The vapour compression system 1 comprises a compressor unit comprising a number of compressors 2, one of which is shown, a heat rejecting heat exchanger 3 and a number of evaporators 5, three of which are shown, arranged in a refrigerant path. The evaporators 5 are arranged fluidly in parallel, and the refrigerant supply to each evaporator 5 is controlled by means of an expansion device 6.

Refrigerant circulating in the refrigerant path is compressed by means of the compressor 2 before being supplied to the heat rejecting heat exchanger 3. When passing through the heat rejecting heat exchanger 3, heat exchange takes place between the refrigerant and the ambient, in such a manner that heat is rejected from the refrigerant.

The refrigerant leaving the heat rejecting heat exchanger 3 is distributed among the expansion devices 6, where it undergoes expansion before being supplied to the respective evaporators 5. The refrigerant being supplied to the evaporators 5 is thereby in a mixed gaseous and liquid state.

When passing through the evaporators 5, the liquid part of the refrigerant is evaporated, while heat exchange takes place between the refrigerant and the ambient, in such a manner that heat is absorbed by the refrigerant. Finally, the refrigerant is once again supplied to the compressor 2.

Each evaporator 5 is arranged in thermal contact with a refrigerated volume. Thereby, the heat exchange taking place in a given evaporator 5 provides cooling to a corresponding refrigerated volume. Furthermore, the refrigerant supply to each evaporator 5 is controlled by means of its corresponding expansion device 6 in such a manner that the temperature inside the corresponding refrigerated volume is maintained within a specified temperature range.

In the method according to the first embodiment of the invention, the vapour compression system 1 receives a load shedding command originating from a power grid. In response thereto, the vapour compression system 1 reduces the compressor capacity of the compressor unit in order to fulfil the load shedding needs of the power grid. This could, e.g., include stopping one or more compressors 2 completely and/or by reducing the capacity of one or more variable capacity compressors 2. Thereby the available refrigerant in the vapour compression system 1 is reduced.

Furthermore, the vapour compression system 1 divides the refrigerated volumes into at least two prioritized categories. A first category includes refrigerated volumes with temperature critical storage, and a second category includes refrigerated volumes with temperature non-critical storage.

Finally, the refrigerant supply to the evaporators 5 being in thermal contact with refrigerated volumes of the second category is discontinued, e.g. by closing the corresponding expansion devices 6, while the refrigerant supply to the evaporators 5 being in thermal contact with the refrigerated volumes of the first category is continued. Accordingly, the evaporators 5 being in thermal contact with the refrigerated volumes with temperature critical storage continue operating in a normal manner, while the evaporators 5 being in thermal contact with refrigerated volumes with temperature non-critical storage no longer provide cooling to the corresponding refrigerated volumes.

Thereby it is ensured that the reduced amount of available refrigerant is distributed to the refrigerated volumes with temperature critical storage, at the expense of the refrigerated volumes with temperature non-critical storage. Accordingly, it is ensured that the vapour compression system 1 is capable of providing load shedding services to the power grid for an extended period of time, without compromising the quality or safety of any temperature critical storage.

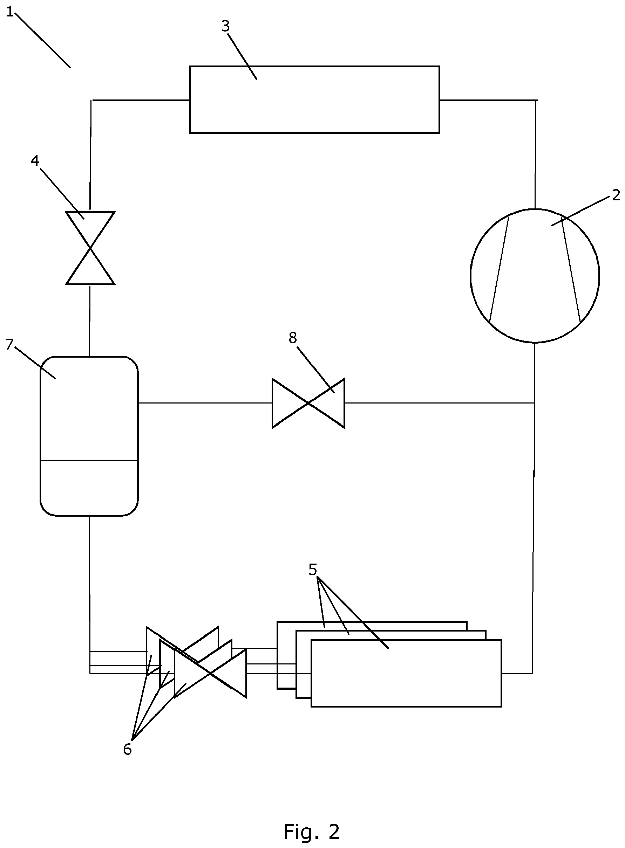

Fig. 2 is a diagrammatic view of a vapour compression system 1 being controlled in accordance with a method according to a second embodiment of the invention. The vapour compression system 1 of Fig. 2 is very similar to the vapour compression system 1 of Fig. 1, and it will therefore not be described in detail here.

The vapour compression system 1 of Fig. 2 further comprises a receiver 7 arranged in the refrigerant path between the heat rejecting heat exchanger 3 and the expansion devices 6, via a high pressure valve 4. In the receiver 7, the refrigerant is separated into a liquid part and a gaseous part. At least part of the gaseous part of the refrigerant is supplied directly to the compressor 2, via a bypass valve 8, without passing through the expansion devices 6 and the evaporators 5. Thereby the gaseous part of the refrigerant is not subjected to the pressure drop taking place in the expansion devices 6, and the energy required in order to compress this part of the refrigerant is therefore reduced. The liquid part of the refrigerant in the receiver 7 is supplied to the expansion devices 6 in the manner described above with reference to Fig. 1.

In response to receiving a load shedding command originating from a power grid, the vapour compression system 1 is operated essentially in the manner described above with reference to Fig. 1. Furthermore, the bypass valve 8 may be closed, thereby ensuring that all refrigerant is directed towards the expansion devices 6 and the evaporators 5.

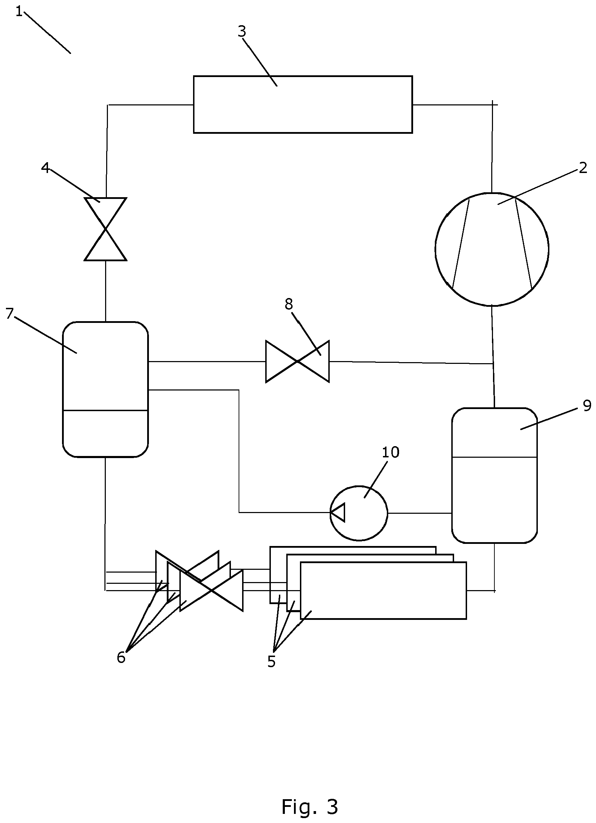

Fig. 3 is a diagrammatic view of a vapour compression system 1 being controlled in accordance with a method according to a third embodiment of the invention. The vapour compression system 1 of Fig. 3 is very similar to the vapour compression system 1 of Fig. 2, and it will therefore not be described in detail here.

The vapour compression system 1 of Fig. 3 further comprises a low pressure liquid buffer 9 arranged in the refrigerant path between the evaporators 5 and the compressor 2, in such a manner that gaseous refrigerant being supplied from the receiver 7 to the compressor 2 via the bypass valve 8 enters the refrigerant path between the low pressure liquid buffer 9 and the compressor 2. Accordingly, refrigerant leaving the evaporators 5 is collected in the low pressure liquid buffer 9. By flooding the evaporators 5 during normal operation of the vapour compression system 1, liquid refrigerant is thereby accumulated in the low pressure liquid buffer 9.

In the low pressure liquid buffer 9, the refrigerant is separated into a liquid part and a gaseous part, and the gaseous part is supplied to the compressor 2. A pump 10 is arranged to pump liquid refrigerant from the low pressure liquid buffer 9 to the receiver 7.

In response to receiving a load shedding command originating from a power grid, the vapour compression system 1 is operated essentially in the manner described above with reference to Figs. 1 and 2. Furthermore, the pump 10 may be activated, in order to supply the previously accumulated liquid refrigerant from the low pressure liquid buffer 9 to the receiver 7, thereby ensuring that liquid refrigerant is available for the evaporators 5 being in thermal contact with the refrigerated volumes of the first category, even if the compressor 2 is completely stopped. In addition, the refrigerant being present in the evaporators 5 being in thermal contact with the refrigerated volumes of the second category may thereby be pumped out and supplied to the evaporators 5 being in thermal contact with the refrigerated volumes of the first category.

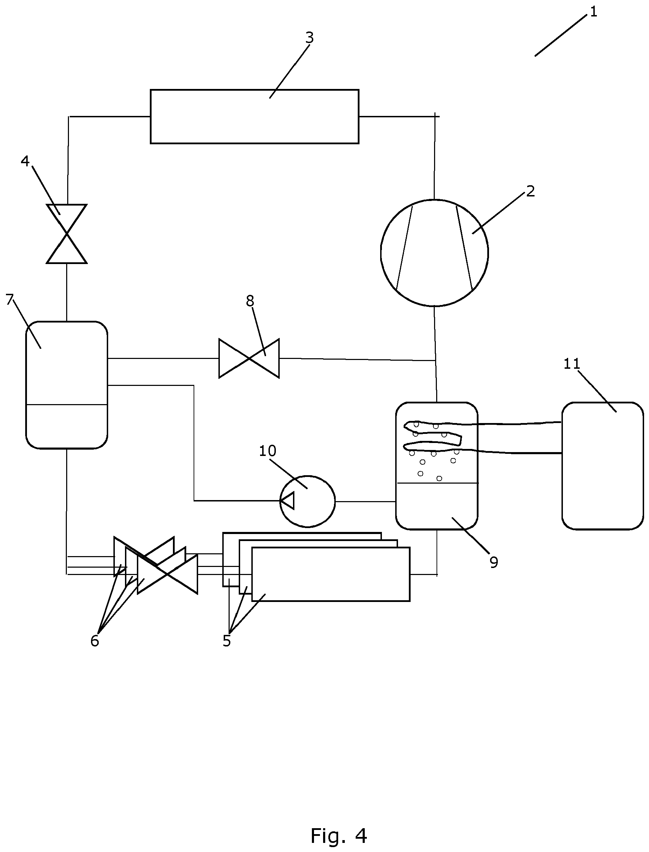

Fig. 4 is a diagrammatic view of a vapour compression system 1 being controlled in accordance with a method according to a fourth embodiment of the invention. The vapour compression system 1 of Fig. 4 is very similar to the vapour compression system 1 of Fig. 3, and it will therefore not be described in detail here.

The vapour compression system 1 of Fig. 4 further comprises a thermal storage 11 arranged to, upon request, perform heat exchange with refrigerant in the low pressure liquid buffer 9.

In response to receiving a load shedding command originating from a power grid, the vapour compression system 1 is operated essentially in the manner described above with reference to Figs. 1, 2 and 3. Furthermore, the thermal storage is activated in the sense that heat exchange is performed between the thermal storage 11 and the gaseous part of the refrigerant in the low pressure liquid buffer 9. Thereby the gaseous part of the refrigerant in the low pressure liquid buffer 9 is at least partly condensed, thereby providing a larger amount of liquid refrigerant which can be supplied to the receiver 7. This allows the refrigerant supply to the evaporators 5 being in thermal contact with the refrigerated volumes of the first category to be upheld for an extended period of time, thereby extending the period during which the vapour compression system 1 is capable of providing load shedding services to the power grid.

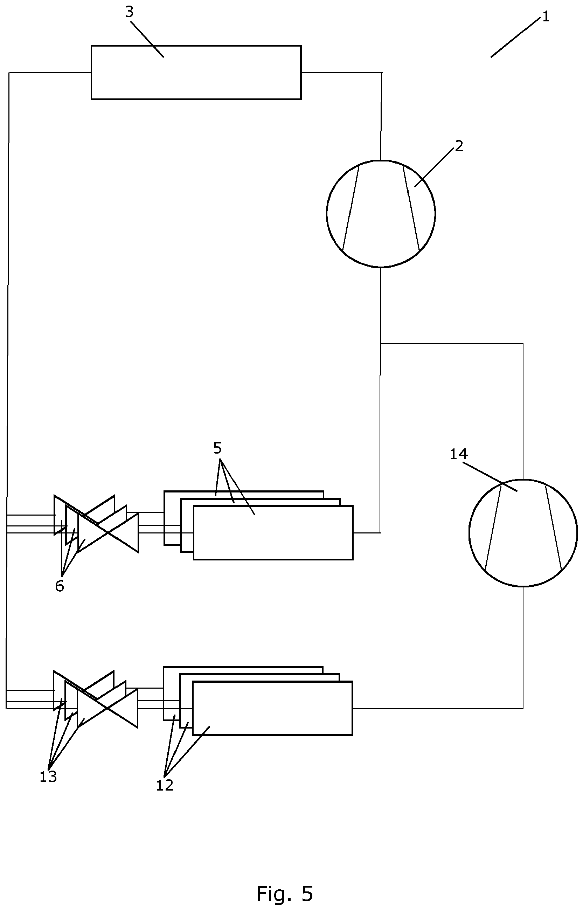

Fig. 5 is a diagrammatic view of a vapour compression system 1 being controlled in accordance with a method according to a fifth embodiment of the invention. The vapour compression system 1 of Fig. 5 is very similar to the vapour compression system 1 of Fig. 1, and it will therefore not be described in detail here.

In the vapour compression system 1 of Fig. 5, the compressor 2, the heat rejecting heat exchanger 3, the evaporators 5 and the expansion devices 6 which are also illustrated in Fig. 1 constitute a medium temperature (MT) part of the vapour compression system 1. The vapour compression system 1 of Fig. 5 further comprises a low temperature (LT) part, comprising a number of LT evaporators 12 arranged fluidly in parallel, and each receiving refrigerant via an expansion device 13, and an LT compressor 14. The refrigerant leaving the LT evaporators 12 is supplied to the LT compressor 14. The LT compressor 14 compresses the refrigerant and supplies it to the MT compressor 2 for further compression.

In response to receiving a load shedding command originating from a power grid, the vapour compression system 1 is operated essentially in the manner described above with reference to Fig. 1. For instance, the vapour compression system 1 may be operated in such a manner that available refrigerant is directed towards the LT evaporators 12 to a greater extent than towards the MT evaporators 5.

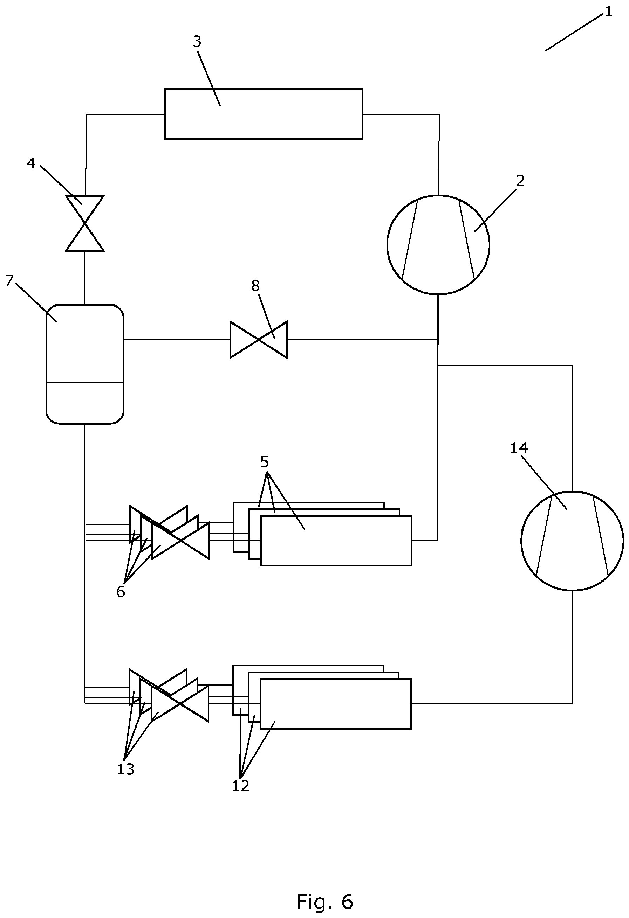

Fig. 6 is a diagrammatic view of a vapour compression system 1 being controlled in accordance with a method according to a sixth embodiment of the invention. The vapour compression system 1 of Fig. 6 is very similar to the vapour compression systems 1 of Figs. 2 and 5, in the sense that it comprises the receiver 7 and bypass valve 8 of Fig. 2 and the LT part of Fig. 5. The vapour compression system 1 of Fig. 6 is therefore controlled essentially as described above with reference to Figs. 1 and 5, and it will therefore not be described in detail here.

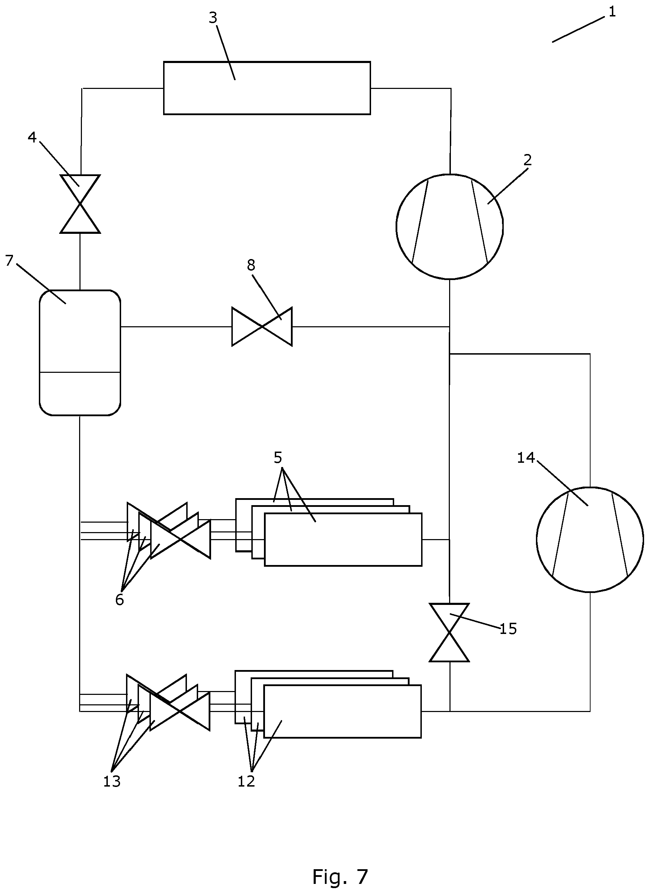

Fig. 7 is a diagrammatic view of a vapour compression system 1 being controlled in accordance with a method according to a seventh embodiment of the invention. The vapour compression system 1 of Fig. 7 is very similar to the vapour compression system 1 of Fig. 6, and it will therefore not be described in detail here.

The vapour compression system 1 of Fig. 7 further comprises a valve 15 arranged in the refrigerant path between the outlets of the LT evaporators 12 and the outlets of the MT evaporators 5.

In response to receiving a load shedding command originating from a power grid, the vapour compression system 1 is operated essentially as described above with reference to Figs. 1, 2, 5 and 6. Furthermore, the valve 15 may be opened. Since the pressure prevailing in the MT part of the vapour compression system 1 is higher than the pressure prevailing in the LT part of the vapour compression system 1, this causes the refrigerant leaving the MT evaporators 5 to flow towards the LT part of the vapour compression system 1.

The large evacuated volume of the LT-evaporators 12 can thereby be utilized to dump the evaporated gas from the MT part of the vapour compression system 1, while the LT compressor 14 is at a standstill as well. This can continue until the pressures of the MT part and the LT part of the vapour compression system 1 are balanced out. This enables the vapour compression system 1 to provide load shedding for a prolonged period of time without jeopardizing the temperature in the refrigerated volumes of the MT part of the vapour compression system 1. To this end, goods stored in the refrigerated volumes of the LT part of the vapour compression system 1 are frozen, and may hence be considered as non-temperature sensitive, as long as it is ensured that no melting takes place.

As the pressure in the LT part of the vapour compression system 1 increases, the temperature of the goods stored in the refrigerated volumes of the LT part of the vapour compression system 1 might become lower than the condensation temperature of the gaseous refrigerant in the MT part of the vapour compression system 1. Thereby the gaseous refrigerant in the MT part of the vapour compression system 1 may start to condensate, while transferring heat to the goods stored in the refrigerated volumes of the LT part of the vapour compression system 1, i.e. extracting cooling from these goods. Thereby the load shedding may be prolonged even further.

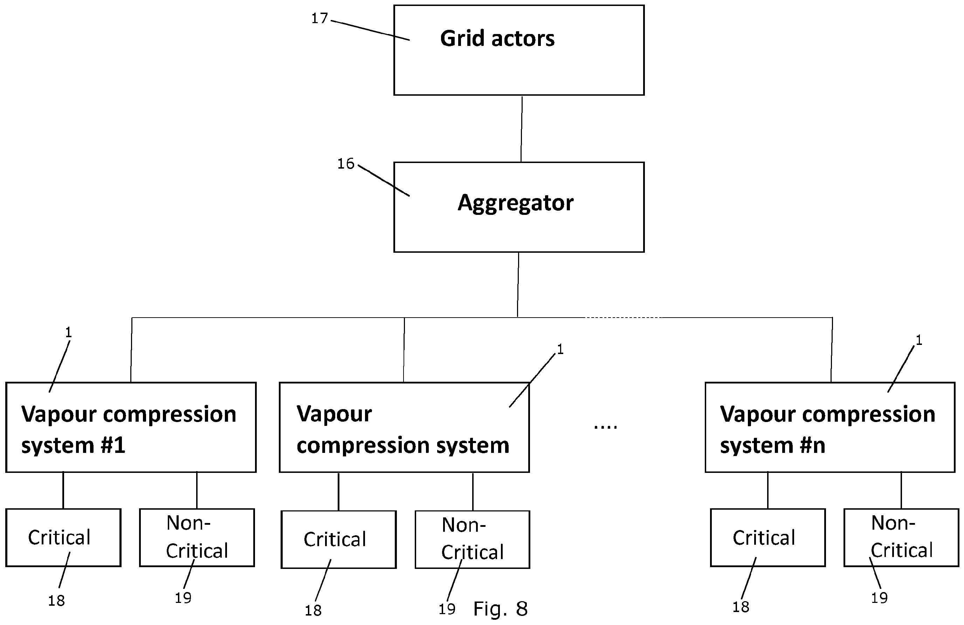

Fig. 8 is a block diagram illustrating a number of vapour compression systems 1, three of which are shown, being administered by an aggregator 16. The vapour compression systems 1 may each be in the form of one of the vapour compression systems 1 illustrated in any of Figs. 1-7.

The aggregator 16 receives load shedding requests from a power grid 17, the load shedding requests indicating a total load shedding need by the power grid 17 to be met by the vapour compression systems 1 being administered by the aggregator 16. Based thereon, the aggregator 16 generates load shedding commands for each of the vapour compression systems 1. The load shedding commands request each of the vapour compression systems 1 to provide load shedding in such a manner that the load shedding contributions from all of the vapour compression systems 1 add up to meet the load shedding need of the power grid 17 which was specified by the load shedding request received by the aggregator 16.

Each vapour compression system 1 comprises two or more refrigerated volumes. Upon receipt of a load shedding command from the aggregator 16, the vapour compression systems 1 reduce the compressor capacity, thereby reducing their power consumption. Furthermore, each vapour compression system 1 divides its refrigerated volumes into two prioritized categories, i.e. a first category 18 including refrigerated volumes with temperature critical storage, and a second category 19 including refrigerated volumes with temperature non-critical storage. Then the vapour compression systems 1 are operated in such a manner that the refrigerated volumes of the first category 18 are prioritized over the refrigerated volumes of the second category 19 when the available refrigerant is distributed among the evaporators arranged in thermal contact with the refrigerated volumes. This could, e.g., be performed in the manner described above with reference to Figs. 1-7.

## Claims

1. A method for controlling a vapour compression system (1), the vapour compression system (1) comprising a compressor unit comprising at least one compressor (2, 14), a heat rejecting heat exchanger (3), and two or more evaporators (5, 12), each evaporator (5, 12) being arranged in thermal contact with a refrigerated volume, and each evaporator (5, 12) receiving refrigerant via an expansion device (6, 13), the method comprising the steps of:
- the vapour compression system (1) receiving a load shedding command originating from a power grid (17),
- in response to receipt of the load shedding command, the vapour compression system (1) reducing a compressor capacity of the compressor unit,
- dividing the refrigerated volumes into at least two prioritized categories of refrigerated volumes, where a first category (18) includes refrigerated volumes with temperature critical storage, and a second category (19) includes refrigerated volumes with temperature non-critical storage,
- discontinuing refrigerant supply to the evaporator(s) (5, 12) being in thermal contact with the refrigerated volume(s) of the second category (19), and
- continuing refrigerant supply to the evaporator(s) (5, 12) being in thermal contact with the refrigerated volume(s) of the first category (18).

2. A method according to claim 1, wherein the step of discontinuing refrigerant supply comprises closing the expansion device(s) (6, 13) which supply refrigerant to the evaporator(s) (5, 12) being in thermal contact with the refrigerated volume(s) of the second category (19).

3. A method according to claim 1 or 2, wherein the step of reducing the compressor capacity comprises stopping all compressors (2, 14) of the compressor unit.

4. A method according to any of the preceding claims, wherein the vapour compression system (1) is a refrigeration system and the refrigerated volumes are display cases, and wherein the step of dividing the refrigerated volumes into at least two prioritized categories (18, 19) of refrigerated volumes is performed on the basis of types of goods stored in the display cases.

5. A method according to claim 4, wherein the step of dividing the refrigerated volumes into at least two prioritized categories (18, 19) of refrigerated volumes comprises evaluating thermal capacity of the goods stored in the display cases.

6. A method according to any of claims 1-3, wherein the vapour compression system (1) is an air condition system and the refrigerated volumes are rooms, and wherein the step of dividing the refrigerated volumes into at least two prioritized categories (18, 19) of refrigerated volumes is performed on the basis of designated use of the rooms.

7. A method according to any of the preceding claims, further comprising the step of, in response to receipt of the load shedding command, activating a thermal storage (11) and supplying cooling to at least some of the refrigerated volumes from the thermal storage (11).

8. A method according to any of the preceding claims, wherein the step of dividing the refrigerated volumes into at least two prioritized categories (18, 19) of refrigerated volumes is performed on the basis of operation history of the refrigerated volumes.

9. A method according to any of the preceding claims, wherein the vapour compression system (1) comprises a medium temperature (MT) part and a low temperature (LT) part, and wherein the method further comprises the step of supplying refrigerant from the MT part of the vapour compression system (1) to the LT part of the vapour compression system (1), in response to receipt of the load shedding command.

10. A method according to any of the preceding claims, further comprising the step of pumping refrigerant out of the evaporator(s) (5, 12) being arranged in thermal contact with the refrigerated volume(s) of the second category (19).

11. A method according to any of the preceding claims, wherein the load shedding command originating from the power grid (17) is provided by an aggregator (16).
